# EUROPEAN PATENT SPECIFICATION

(11) **EP 3 149 322 B1**
(45) Date of publication and mention of the grant of the patent: **09.09.2020**
(21) Application number: 15726658.6
(22) Date of filing: 21.05.2015
(51) Int. Cl.: F02M 63/00, F02M 63/02, F16K 47/06, F16K 15/02

(54) **A SAFETY VALVE ARRANGEMENT FOR A COMMON RAIL FUEL IN-JECTION SYSTEM AND A COMMON RAIL FUEL INJECTION SYSTEM**
SICHERHEITSVENTILANORDNUNG FÜR EIN COMMON-RAIL-KRAFTSTOFFEINSPRITZSYSTEM UND COMMON-RAIL-KRAFTSTOFFEINSPRITZSYSTEM
STRUCTURE DE SOUPAPE DE SÛRETÉ POUR SYSTÈME D'INJECTION DE CARBURANT À RAMPE COMMUNE ET SYSTÈME D'INJECTION DE CARBURANT À RAMPE COMMUNE

(30) Priority: 28.05.2014 FI 20145482
(43) Date of publication of application: 05.04.2017
(73) Proprietor: Wärtsilä Finland Oy, 65100 Vaasa (FI)
(72) Inventor: ENLUND, Janne, FI- 20810 Turku (FI); VOUTILAINEN, Vesa, 65100 Vaasa (FI); VUOHIJOKI, Antti, 65101 Vaasa (FI)
(74) Representative: Genip Oy
(86) International application number: PCT/FI2015/050348
(87) International publication number: WO 2015/181441

(56) References cited:
- EP-A1- 1 857 748
- WO-A1-2013/093179
- FR-A- 1 019 078

## Description

### Technical field

The present invention relates to a safety valve arrangement for a common rail fuel injection system of an internal combustion engine, comprising a body having a space with an inlet at its first end, arranged to be connected to the working volume of the pressure accumulator system, and an outlet arranged to a wall of the body, arranged to be connected to a low pressure fuel system of the engine, and a piston unit arranged into the space movably in its longitudinal direction and a spring device urging the piston unit towards the first end of the space.

Invention relates also to a common rail fuel injection system provided with such a safety valve arrangement.

### Background art

In known fuel injection systems of so called common rail type for feeding fuel in internal combustion engines, the pressure in the rail may exceed the limiting values that may cause damage and disturbance for the engine. Therefore, common rail systems have a valve function to limit the pressures and not exceeding the critical limiting values. The common rail systems are often provided with safety valve arrangements for depressurizing the system when stopping the engine or in an emergency situation.

In WO 2012130521 A1 there is disclosed a pressure regulator for a diesel fuel injection system. It comprises an inlet which is connectable to a reservoir of a diesel fuel injection system of a diesel engine, an outlet which is connectable to a lower pressure group, controllable closing means which can be driven by an actuator between a first state in which the inlet and the outlet are hermitically isolated and a second state in which the inlet is connected to the outlet as well as plurality spaces arranged on the side of the closing means provided with the outlet. A pressure compensation duct is provided which connects at least two of the above-mentioned spaces to each other.

In WO 2013093179 A1 is disclosed a safety valve arrangement for a common rail fuel injection system of an internal combustion engine. The safety valve arrangement comprises a body having a space with an inlet at its first end that is arranged to be connected to the working volume and an outlet arranged to a wall of the body and it is connected to a low pressure fuel system. An annular cross sectional area is formed by the outer periphery of the piston unit and the inner surface of the space, which annular cross section is equal or greater than the cross sectional area of the inlet at least when the piston unit opens the outlet. The safety valve arrangement is not substantially effected by the viscosity of the fuel.

EP 0964153 discloses a control and safety valve arrangement in a fuel feeding system of an internal combustion engine in which fuel is pumped from a fuel tank at least to one common pressure accumulator unit and is fed therefrom under high pressure for injection into at least two cylinders of the engine. The pressure accumulator unit is connected to the fuel tank by means of a separate flow line which is provided with valve means.

Known valve arrangements have relatively large flow areas which may cause that in operation the piston unit of the valve arrangement starts to vibrate. Particularly in operation the pressure drop may happen relatively quickly and flow path may change relatively quickly. These impair the reliability and durability of the valve arrangement.

An object of the invention is to provide a safety valve arrangement for a common rail fuel injection system of an internal combustion engine, and a common rail fuel injection system for an internal combustion engine, in which the performance is considerably improved compared to the prior art solutions.

### Disclosure of the Invention

Object of the invention is substantially met by a safety valve arrangement for a common rail fuel injection system of an internal combustion engine comprising a pressure accumulator system having a working volume and at least one fuel injector in connection thereto, which safety valve arrangement comprises a body having a space with an inlet at its first end, arranged to be connected to the working volume of the pressure accumulator system, and an outlet arranged to a wall of the body, arranged to be connected to a low pressure fuel system of the engine, and a piston unit which is arranged into the space movable in its longitudinal direction between positions at which the piston unit is arranged in an interaction with the inlet thereby closing it and at which the piston unit is off the interaction with the inlet opening the inlet, and a spring device urging the piston unit towards the inlet at the first end of the space and where the piston unit and the body together form a control section at which the inner surface of the space of the body and outer surface of the piston unit are facing against each other. It is characteristic to the invention that at the control section the piston unit comprises a grooving on its outer surface extending at least partly in longitudinal direction of the piston unit, which grooving comprises at least one groove extending circumferentially along the piston unit so that an axial length of the grooving is smaller than a circumferential length of the groove, and that a first end of the control section is arrangeable in fluid communication with the inlet by setting the piston unit to its position off the interaction with the inlet, and that the control section is bordered at its second end by a radial extension arranged to the space and being in flow communication with outlet, and that the control section is bordered at its second end by an annular re-cess arranged to the body and being in fluid communication with the outlet.

This provides a safety valve arrangement for a common rail fuel injection system of an internal combustion engine in which the performance is considerably improved. This way the control section forms a gradually operating pressure relief system of the valve arrangement. Particularly, the cavitation caused by high flow velocities of the fuel in the safety valve arrangement is reduced compared to prior art solutions. Therefore, the safety valve arrangement according to the invention provides a reliable and long lasting valve arrangement.

Advantageously, due to the fact that the axial length of the grooving is smaller than the circumferential length of the groove and the flow area is small, the flow in the grooving is maintained laminar. The groove provides a main flow path from the inlet to outlet when the piston unit is off the closing position and the flow communication from inlet to outlet is open. The relieved fluid is guided from inlet to outlet via the grooving of the piston. Thus the unwanted vibrations are effectively prevented and the operation of the safety valve arrangement is stabilized compared to prior art solutions. A risk for a cavitation is reduced compared to prior art solutions wherein the flow path changes rapidly and expansion of the fluid happens in very short length.

The phrase the piston unit is arranged in an interaction with the inlet means that either 1) the piston unit is against the inlet so being in a direct contact with the inlet or 2) the piston unit is arranged in an indirect contact with the inlet, for example, having a piston member such as a ball between the inlet and the piston unit. Respectively, off the interaction with the inlet means that the piston unit is not against the inlet, nor in an indirect contact with the inlet. The piston unit may be of a singular piece or assembled of several parts.

The groove has a cross-sectional area of a circular, quadrangular, or alike in practical circumstances. In other words, the grooves resemble chutes or alike.

According to an embodiment of the invention, the groove of the grooving extends at least 360 ° in the circumferential direction of the piston unit along the outer surface of the piston unit. According to an embodiment of the invention, the groove extends in the circumferential direction at least once around the piston unit.

According to an embodiment of the invention, a helix angle of the groove is in a range of 5 ° - 60 °. According to an embodiment of the invention, a helix angle of the groove is less than 60 °.

According to an embodiment of the invention, the outlet comprises a control edge circumscribing the internal surface of the space in the body.

According to an embodiment of the invention, the safety valve arrangement is provided with a longitudinally extending gap between the piston unit and the body constituting a flow path between the inlet and the control section.

According to an embodiment of the invention the piston unit comprises a needle part having a first diameter, and a control part having a second diameter larger than the first diameter, and the control section is longitudinally defined at its first end by a departure of the grooving on the outer surface of the control part from the inner surface of the body.

According to an embodiment of the invention the grooving has a first end in longitudinal direction at the side of the inlet and a second end in longitudinal direction at the side of the outlet and that when the piston unit is at a position closing the inlet the second end in longitudinal direction of the grooving is at a distance from the control edge of the outlet.

According to an embodiment of the invention, the grooving comprises a helical groove with at least one threaded groove.

According to another embodiment of the invention, the grooving comprises double threaded helical groove.

According to another embodiment of the invention, the grooving comprises counter threaded helical groove.

According to another embodiment of the invention, the grooving may comprise number of radially circumscribing grooves with longitudinal groove connecting the radially circumscribing grooves.

According to an embodiment of the invention, a length of the groove is longer than a length of the control section.

Since the valve arrangement is provided with the grooving, the pressure reduces more smoothly between an inlet and an outlet. Therefore, the pressure drop is slower compared to prior art solutions. Advantageously the valve arrangement provides very stable pressure reduction operation.

According to an embodiment of the invention, the space in the body and the piston unit are provided with a cylindrical cross section at least in the region of the control section.

Objects of the invention are also met by a common rail fuel injection system for an internal combustion engine which comprises a safety valve arrangement according to anyone of the claims 1 - 10.

### Brief Description of Drawings

In the following, the invention will be described with reference to the accompanying exemplary, schematic drawings, in which
Figure 1 illustrates a safety valve arrangement for a common rail fuel injection system of an internal combustion engine according to the first embodiment of the invention,
Figure 2 illustrates a safety valve arrangement according to an embodiment of the invention at a first position,
Figure 3 illustrates a safety valve arrangement according to an embodiment of the figure 2 at a second position,
Figure 4 illustrates a safety valve arrangement according to an embodiment of the figure 2 at a third position,
Figure 5 illustrates a safety valve arrangement according to another embodiment of the invention at a first position,
Figure 6 illustrates a safety valve arrangement according to an embodiment of the figure 5 at a second position,
Figure 7 illustrates a safety valve arrangement according to an embodiment of the figure 5 at a third position,
Figure 8 illustrates different types of grooving areas in a safety valve arrangement according to embodiments of the invention and
Figure 9 illustrates a safety valve arrangement according to another embodiment of the invention.

### Detailed Description of Drawings

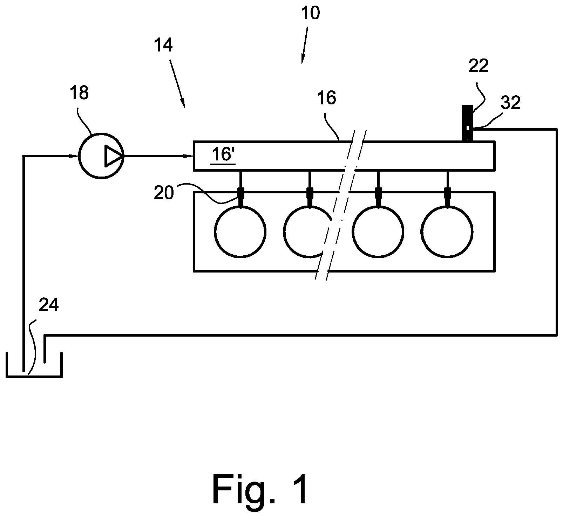

Figure 1 depicts schematically a safety valve arrangement 22 assembled in a common rail fuel injection system 14 of an internal combustion engine 10. The fuel injection system 14 comprises a pressure accumulator 16 i.e. a common rail, having a working volume 16' and at least one fuel injector 20 in connection with each cylinder of the engine. There is a fuel tank or alike 24 from which a high pressure pump unit 18 is arranged to pump the fuel in to the common rail 14 and the safety valve arrangement 22 is arranged in communication with the working volume 16' of the common rail 14.

In normal operation of the engine 10 the high pressure pump unit 18 pressurizes and maintains fuel pressurized in a working volume 16' of the pressure accumulator system 16 at pressure level required by the engine 10 e.g. about 2400 bar. Fuel is metered for combustion into the cylinders by each injector 20 independently. In order to avoid any destruction of the components of the engine or causing danger to surroundings, the common rail fuel injection system 14 is provided with the safety arrangement 22. By means of the safety valve arrangement 22, the pressure of the fuel in the pressure accumulator 16 may be relieved by opening a flow path to low pressure part of the fuel system, such as the tank 24, in case the pressure increases to a too high level.

It should be understood that the engine 10 comprises various parts known as such which are not shown in the Figure 1 for the sake of simplicity and only some elements of the engine are shown being necessary for understanding the invention.

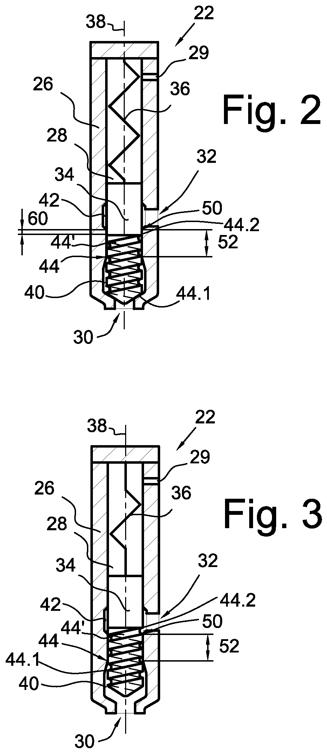

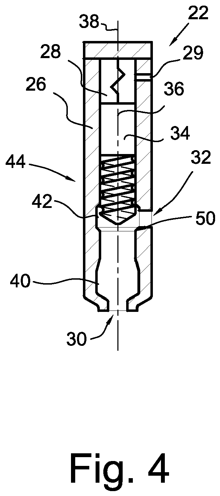

In the Figures 2 - 4 there is shown a safety valve arrangement 22 according to an embodiment of the invention at its different operational positions. Figure 2 illustrates schematically the safety valve arrangement 22 in a position where the safety valve arrangement 22 is fully closed. Figure 3 illustrates the safety valve arrangement 22 in an intermediate position where the safety valve arrangement 22 about to open to its full extent. Figure 4 illustrates the safety valve arrangement 22 in a position where the safety valve arrangement 22 fully open. The safety valve arrangement 22 in the embodiment of figures 2 - 4 comprises a body 26 having an inner space 28 with cylindrical cross section. In the body 26, the cylindrical space 28 extends longitudinally having a central axis 38. The safety valve arrangement 22 comprises further a piston unit 34 arranged into the space 28 movably in its longitudinal direction and a spring device 36 urging the piston unit 34 towards the first end of the space 28. In this embodiment, the cylindrical space 28 comprises a cylindrical inner surface of substantially same diameter as the piston unit 34 guiding the movement of the piston unit 34 along the central axis 38 of the cylindrical space 28.

The cylindrical space 28 is further provided with an inlet 30 at its first end, arranged to be connected to the working volume 16' of the high pressure fuel system, here directly to the pressure accumulator system 16, and an outlet 32 arranged to a wall of the body 26. The outlet 32 is arranged to be connected to a low pressure fuel system such as a fuel tank 24 of the engine 10, and a cylindrical piston unit 34 is arranged into the cylindrical space 28 in a spring loaded manner urging the cylindrical piston unit 34 towards the inlet 30. The piston unit is arranged movable between positions at which the piston unit 34 is against the inlet 30 thereby closing the inlet 30 and at which the piston unit is off the inlet 30 thereby opening the inlet. In Figure 2, there is shown a position of the piston unit 34 where it is against the inlet 30, closing it. The piston unit 34 is in direct contact with the inlet 30, closing it. In other words, the piston unit 34 is arranged in an interaction with the inlet 30. The operational effect of the safety valve arrangement 22 is ruled by the position of the piston unit 34 in the space 28 in relation of the inlet 30 and the outlet 32. The body 26 is provided with a leak fluid outlet 29 opening into the space 28 on the side of the spring device 36.

In this embodiment, the space 28 is additionally provided with a first annular recess 40 in the body arranged to extend from the inlet 30 over the first longitudinal distance from the inlet 30 in the direction of the central axis 38. The space 28 further comprises a radial extension at a distance from the inlet 30. The radial extension forms a second annular recess 42 arranged to the cylindrical guiding surface forming an extension of the outlet 32 into the space of the body 26.

The outlet 32, more precisely the annular recess 42 in the body, is provided with a control edge 50 which is shown in Figure 2 as the edge of the outlet 32 being nearest to or on the side of the inlet 30. The piston unit 34 has here a helical grooving 44 on the outer surface of the piston unit 34, which helical grooving 44 extends at least partly in longitudinal direction of the piston unit 34. The helical grooving 44 has a first end in longitudinal direction 44.1 at the side of the inlet 30 and a second end in longitudinal direction 44.2 at the side of the outlet 32, in other words the first end in longitudinal direction is on the inlet side and the second end in longitudinal direction is on the outlet side of the grooving. When the piston unit 34 is against the inlet i.e. at its closing position, the second end in longitudinal direction 44.2 of the grooving 44 is nearer to the inlet than the control edge 50. The grooving 44 is formed here of a single, one threaded groove 44'. The groove 44' of the grooving 44 extends circumferentially in a circumferential direction along the piston unit 34 so that an axial length, i.e. the longitudinal length of the piston unit 34, of the grooving 44 is smaller than a circumferential length of the groove 44'.

The piston unit 34 and the body 26 together form a control section 52 at which the inner surface of the body and outer surface of the piston unit are against each other. In the control section 52 the piston unit comprises a grooving 44 on its outer surface extending at least partly in longitudinal direction of the piston unit. A first end of the control section 52 is arranged in fluid communication with the inlet 30 by changing the piston unit 34 to its position off the inlet. In such position the inlet is open and the fluid may flow into the grooving. The control section 52 is bordered at its second end by the radial extension 42 arranged to the space 28. The radial extension is in constant flow communication with outlet. The control section 52 extends in longitudinal direction at a region where the diameter of an inner surface of the body 26 is substantially the same as the diameter of the piston unit 34, and where a surface of the piston unit 34 and the inner surface of the body 26 are arranged against and contacting each other in the control section 52. The fitting between the inner surface of the body 26 and the outer surface of the piston unit 34 is tight so that the fuel flow practically takes place via the grooving when the piston unit 34 is in such position that the control section is effective.

In other words, in the control section 52 the inner plane of the body 26 and outer plane of the piston unit 34 are generally co-directionally facing against each other. The control section 52 is located at the inlet side of the control edge 50 of the outlet 32. The control section 52 is arranged to extend from the control edge 50 towards the inlet 30. The control section is defined at its second end by the control edge 50 of the outlet 32 and at its first end by an end of the grooving 44 being against the inner surface of the body 26 or by a departure of the grooving on the outer surface of the control part from the inner surface of the body.

As there is the first annular recess 40 arranged in the body 26 on the inlet side of the control section 52 and since the diameter of the first annular recess 40 is greater than the diameter of the piston unit 34, there is a gap between the surface of the piston unit 34 and the inner surface of the body 26 via which the fuel may enter to the control section 52 immediately after the piston unit 34 has moved away from the inlet 30 and opened the passage through the inlet 30.

In Figure 2 there is shown how a portion of the helical grooving 44 in the piston unit 34 extends to the first annular recess 40. Particularly the first end in longitudinal direction 44.1 of the helical grooving 44 is arranged in the first annular recess 40 in the body and the second end in longitudinal direction 44.2 is located in the control section 52.The control section 52 extends longitudinally in the direction from the second end in longitudinal direction 44.2 of the grooving to the control edge 50 as generally circularly plain surface. Furthermore, the actual length of the groove 44' is longer than a longitudinal length of the control section 52. In other words, there is arranged a dead zone 60 which is, a distance free of grooving between the control edge 50 and the second end in longitudinal direction 44.2 of the helical grooving 44. The dead zone 60 is located in the upper portion of the control section 52, in relation to the position of figure 2. In the dead zone 60 the surface of the piston unit 34 is substantially even or circularly plain. The surface of the piston unit 34 and the inner surface of the body 26 are arranged against and contacting each other forming only a small gap between them. According to an embodiment of the invention, the dead zone 60 can be, for example, < 1 mm or at most < 2 mm long in the longitudinal direction. When the piston unit 34 is at the position closing the inlet 30, as in Figure 2, the distance between the control edge 50 and the second end in longitudinal direction 44.2 of the helical grooving 44 is at its longest.

The safety valve arrangement operates in a manner described in the following. The pressure of the fuel acts against the piston unit 34 via the inlet 30 and creates a lifting or moving force determined by the pressure and the area of the inlet. Respectively the spring device 36 creates an opposite closing force to the piston unit 34. In normal pressure levels the force created by the spring device is greater than the force created by the pressure.

In a situation where the pressure of the fuel in the pressure accumulator 16 increases such that the force created by the pressure exceeds the force created by the spring device 36, the piston unit 34 starts to move away from the inlet 30, thus opening the inlet. At this stage the fuel can enter in to the recess space 40 between the inlet and the piston unit 34. Due to the first recess 40, the fuel may flow from the inlet 30 directly into the control section 52 and to the grooving 44.

Now, pressure of the fuel effects on area defined by the diameter of the piston unit 34 creating even greater force against the spring device 36. At the beginning of the movement of the piston unit a direct flow path between the inlet 30 and the outlet 32 is still closed because of the dead zone 60. Next, the piston unit 34 continues its movement away from the inlet 32 such that after the movement corresponds the length of the dead zone 60 the second end in longitudinal direction 44.2 of the grooving 44 finally passes the control edge 50 so as to provide a flow communication between the inlet 30 and the outlet 32, and when assembled to the fuel system between the high and low pressure systems i.e. the pressure accumulator 16 and, for example the tank 24. This position is shown in Figure 3. The piston unit 34 is off the interaction with the inlet 30, opening it. The piston unit 34 is off the inlet 30. In other words, the piston unit 34 needs to move at least over a distance of the dead zone 60 shown in Figure 2 in order to open the flow communication. The groove 44' of the grooving 44 provides a main flow path for the fluid to flow from the inlet 30 to the outlet 32. The fluid flows mainly via the grooving 44 of the piston unit 34 from the inlet 30 to outlet 32. The groove 44' of the grooving 44 provides an adequately small cross-sectional fluid flow area. The groove is advantageously dimensioned and formed such that in practical circumstances the flow in the groove 44' of the grooving is laminar. This way the unwanted vibrations are prevented to occur or at least minimized. Due to the grooving 44, also the cavitation is reduced. The pressure drops more smoothly between the inlet 30 and the outlet 32. Particularly, the pressure drops more smoothly in the grooving 44 which means that pressure drop happens slower as well as fluid expansion and due to that the risk of cavitation is reduced.

After the piston unit 34 has reached a position where the second end in longitudinal direction 44.2 of the grooving 44 is at the location of the control edge 50 the fuel flow through the valve arrangement starts. At this position the fuel flows mainly through the grooving 44 since the gap between the piston unit 34 and the inner wall of the space 28 is substantially tight. In this position, the second end in longitudinal direction 44.2 of the grooving 44 is located above the control edge 50, in the position of figure 3, and the first end in longitudinal direction 44.1 of the grooving 44 is arranged in the first annular recess 40 of the body. A portion of the grooving 44 is still located in the control section 52. Now the fuel may flow through the inlet 30, enter from the first end in longitudinal direction 44.1 of the grooving 44 into the grooving 44 and flow through the second end in longitudinal direction 44.2 of the grooving 44 via the outlet 32 into the lower pressure system, such as the tank 24. This way the control section 52 forms a gradually operating pressure relief system of the valve arrangement. Now, as the piston unit 34 continues to move away from the inlet 30 the longitudinally length of the control section 52 decreased which provides the effect to gradually decreasing pressure loss over the control section 52 and respectively gradually increasing the flow rate of the fuel. And finally the piston unit 34 may reach the position where the outlet is fully open also, this is shown in figure 4. This way the pressure reduction at the inlet 30 and at the common rail 16 may be arranged to take place gradually minimizing the possibility of cavitation.

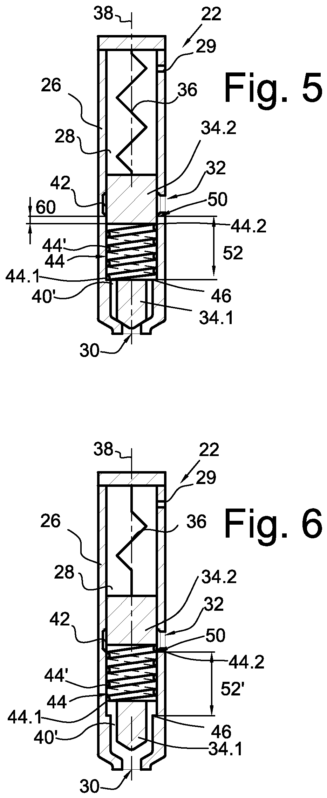

Figure 5 shows schematically another embodiment of the invention. Same reference numbers has been used for corresponding elements as in figures 2 - 4. In figure 5 the piston unit 34 is shown in a position which closes the inlet 30 and the safety valve arrangement 22, as well. In this embodiment, the piston unit 34 has a first end portion 34.1 which has a first diameter. The first end portion 34.1 is also called here as a needle part. The piston unit 34 has also a second portion 34.2 which has a second diameter. The second portion 34.2 is also called here as a control part. The second diameter is greater than the first diameter.

The second portion i.e. the control part 34.2 of the piston unit 34 and the body 26 together form a control section 52. Particularly, in Figure 5, the control section 52 is formed between the first end in longitudinal direction 44.1 of grooving 44 and the control edge 50 of the outlet 32. The control section 52 is longitudinally defined at its first end by an end of the grooving 44 on the outer surface of the control part 34.2. Here the grooving has its first end 44.1 in longitudinal direction beginning at an edge of the control part 34.2 next to the needle part 34.1 i.e. at the radial extension 46 of the piston unit from the first diameter to the second diameter. There is also a dead zone 60 in this embodiment which is, in this case, a distance free of grooving between the control edge 50 and the second end in longitudinal direction 44.2 of the helical grooving 44. The dead zone 60 is located in the upper portion of the control section 52, in relation to the position of figure 5. In the dead zone 60 the surface of the piston unit 34 is substantially even or circularly plain.

The diameter of the inner surface of the body 26 need not necessarily have a shoulder opposite to the lower surface of the radial extension 46. As is shown in figure 5, there is an annular space 40' between the first portion 34.1 of the piston unit 34 and the inner surface of the body 26. Instead of such an annular space there may be arranged a simple cut-out to the needle part 34.1. However, in the control section 52, the diameter of the inner surface of the body 26 and the diameter of the second portion 34.2 of the piston unit are substantially equal, that is, both having the same diameter. Hence, an outer surface of the second portion 34.2 of the piston unit 34 and the inner surface of the body 26 are arranged against and contacting each other in the control section 52. In other words, in the control section 52 the inner plane of the body 26 and outer plane of the second portion 34.2 of the piston unit 34 are generally co-directionally facing against each other. The space 28 further comprises a second annular recess 42 arranged to the cylindrical guiding surface forming an extension of the outlet 32 into the space. Similarly as in Figures 2-4, the outlet 32 is positioned on the wall of the body 26 the edge of which is bordering the control section 52.

In Figure 6, there is shown the embodiment of the safety valve arrangement 22 of figure 5 in which the piston unit 34 is at another position. Here, the piston unit 34 is at a position where the inlet 30 is open. Additionally the pressure at the inlet 30 has caused the piston unit to move away from the inlet 30 such that a flow communication through the grooving 44 has opened. In this position of the piston unit 34 the fuel may substantially freely enter in to the grooving 44 and flow via the grooving 44 to the second annular recess 42 and the outlet 32.

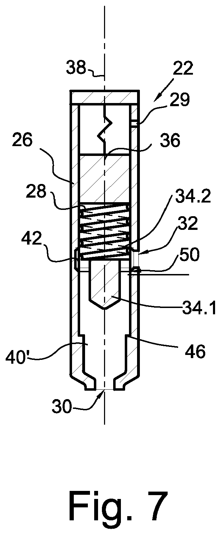

In this case, the second end in longitudinal direction 44.2 of grooving 44 has been passed the control edge 50 and the first end in longitudinal direction 44.1 of the grooving 44 is in the control section 52. Particularly, the fuel may flow through the inlet 30 into the annular space 40' around the first portion 34.1 of the piston unit 34, then enter from the first end in longitudinal direction 44.1 of the grooving 44 into the grooving 44, and then through the second end in longitudinal direction 44.2 of the grooving 44 to the outlet 32. And finally the piston unit 34 may reach the position where the outlet is fully open, this is shown in figure 7. This way the pressure reduction at the inlet 30 and at the common rail 16 may be arranged to take place gradually minimizing the possibility of cavitation.

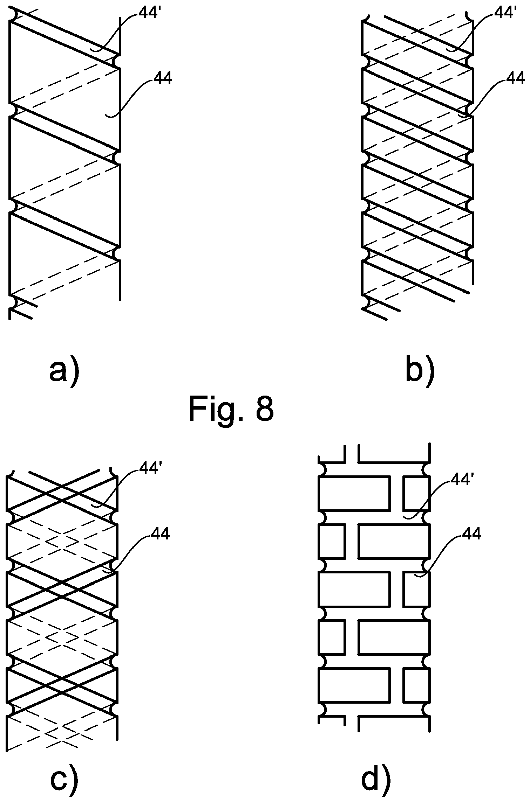

Figure 8 shows different types of the grooving 44. In the view a) there is shown a one threaded groove 44', in the view b) double threaded grooves 44'. In the view c) there is shown counter threaded grooves 44' and in view d) radially circumscribing groove 44's with longitudinally extending groove part 44'. It should be understood that all types of the grooving 44 are applicable in all embodiments shown in Figures 2-7 alone or as combinations.

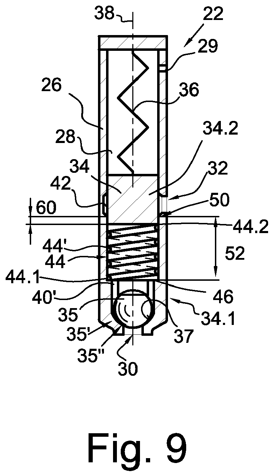

In figure 9 there is shown a safety valve arrangement 22 according to an embodiment of the invention. The safety valve arrangement 22 is in a position where the safety valve arrangement 22 is fully closed. The safety valve arrangement 22 comprises a body 26 which is basically similar to the body shown in the figures 2 to 7. It has an inner space 28 with cylindrical cross section which extends longitudinally having a central axis 38. The valve arrangement 22 comprises further a piston unit 34 arranged into the space 28 movably in its longitudinal direction and a spring device 26 urging the piston unit 34 towards the first end of the space 28 i.e. it closing position. In this embodiment, the piston unit 34 comprises a first end portion 34.1 and a second portion 34.2 which has a second diameter. The second portion 34.2 is also called here as a control part. In this embodiment of the invention the first end portion 34.1 which operates also for closing the inlet 30, comprises a spherical head 35. Particularly in the embodiment shown in figure 9 the spherical head 35 is a separate ball arranged to mate with the end of the piston unit 34. In Figure 9, the piston unit 34 is arranged in an interaction with the inlet 30. The piston unit 34 is in indirect contact, or in other words indirectly against, with the inlet 30 so closing it. In order to provide a surface mating with the ball the piston unit is provided with a concave recess 37 at its end. The body 26 is provided with progressively closing inner surface against the spherical head 35. The inner surface comprises a spherical section 35' and a chamfer 35" closest to the inlet 30. This way the opening operation of the safety valve arrangement is more precise.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The helical grooving area may be arranged to extend at least partially inside the piston unit, even though, in figures the grooving is shown on the outer surface of the piston unit. The details mentioned in connection with any embodiment above may be used in connection with another embodiment when such combination is technically feasible.

## Claims

1. A safety valve arrangement (22) for a common rail fuel injection system (14) of an internal combustion engine (10) comprising a pressure accumulator (16) system having a working volume (16') and at least one fuel injector (20) in connection thereto, which safety valve arrangement (22) comprises a body (26) having a space (28) with an inlet (30) at its first end, arranged to be connected to the working volume (16') of the pressure accumulator (16) system, and an outlet (32) arranged to a wall of the body (26), arranged to be connected to a low pressure fuel system of the engine, and a piston unit (34) which is arranged into the space (28) movable in its longitudinal direction between positions at which the piston unit (34) is arranged in an interaction with the inlet (30) thereby closing it and at which the piston unit is off the interaction with the inlet opening the inlet (30), and a spring device (36) urging the piston unit (34) towards the inlet (30) at the first end of the space (28), wherein the piston unit (34) and the body (26) together form a control section (52) at which the inner surface of the space (28) of the body (26) and outer surface of the piston unit (34) are facing against each other, **characterized in that** at the control section (52) the piston unit (34) comprises a grooving (44) on its outer surface extending at least partly in longitudinal direction of the piston unit (34), which grooving comprises at least one groove (44') extending circumferentially along the piston unit (34) so that an axial length of the grooving (44) is smaller than a circumferential length of the groove, and that a first end of the control section (52) is arrangeable in fluid communication with the inlet (30) by setting the piston unit (34) to its position off the interaction with the inlet (30), and that the control section (52) is bordered at its second end by an annular recess (42) arranged to the body (26) and being in fluid communication with the outlet (32).

2. A safety valve arrangement according to claim 1, **characterized in that** the outlet (32) in the body comprises a control edge (50) in the annular recess (42) circumscribing the internal surface of the space (28) in the body (26).

3. A safety valve arrangement according to claim 1, **characterized in that** the piston unit (34) comprises a needle part (34.1) having a first diameter, and a control part (34.2) having a second diameter larger than the first diameter, and that the control section (52) extending longitudinally is defined by the control part (34.2) of the piston unit (34) and the body (26).

4. A safety valve arrangement according to claim 1 or 3, **characterized in that** the grooving (44) has a first end in longitudinal direction (44.1) at the side of the inlet (30) and a second end in longitudinal direction (44.2) at the side of the outlet (32) and that when the piston unit (34) is at a position closing the inlet (30) the second end, in longitudinal direction (44.2) of the grooving, is at a distance (60) from the control edge (50) of the outlet (32).

5. A safety valve arrangement according to claim 4, **characterized in that** the grooving (44) comprises a helical groove with at least one threaded groove (44').

6. A safety valve arrangement according to claim 4, **characterized in that** the grooving (44) comprises double threaded helical groove (44').

7. A safety valve arrangement according to claim 4, **characterized in that** the grooving (44) comprises counter threaded helical groove (44').

8. A safety valve arrangement according to claim 4, **characterized in that** the grooving (44) comprises a number of radially circumscribing grooves (44') with a longitudinal groove (44') connecting the radially circumscribing grooves (44').

9. A safety valve arrangement according to claim 1, **characterized in that** the space (28) in the body and the piston unit (34) are provided with a cylindrical cross section at least in the region of the control section (52).

10. A safety valve arrangement according to claim 1, **characterized in that** the space (28) in the body (26) and the piston unit (34) are provided with a cylindrical cross section at least in a region of the control section (52) wherein the control section (52) extends in longitudinal direction at a region where a diameter of the inner surface of the body (26) is substantially the same as a diameter of the piston unit (34).

11. A common rail fuel injection system (14) for an internal combustion engine (10) comprising the safety valve arrangement (22) according to anyone of the preceding claims.

## Patentansprüche

1. Sicherheitsventilanordnung (22) für eine Common-Rail-Kraftstoffeinspritzanlage (14) einer Verbrennungskraftmaschine (10), die eine Drucksammleranlage (16), die ein Arbeitsvolumen (16') aufweist, und wenigstens eine KraftstoffEinspritzvorrichtung (20) in Verbindung damit umfasst, wobei die Sicherheitsventilanordnung (22) ein Gehäuse (26), das einen Raum (28) mit einem Einlass (30) an seinem ersten Ende, dafür angeordnet, mit dem Arbeitsvolumen (16') der Drucksammleranlage (16) verbunden zu werden, und einem an einer Wand des Gehäuses (26) angeordneten Auslass (32), dafür angeordnet, mit einer Niederdruck-Kraftstoffanlage der Kraftmaschine verbunden zu werden, und eine Kolbeneinheit (34), die in ihrer Längsrichtung in dem Raum (28) beweglich angeordnet ist, zwischen Stellungen, bei denen die Kolbeneinheit (34) in einer Wechselwirkung mit dem Einlass (30) angeordnet ist, wodurch sie ihn verschließt, und bei denen sich die Kolbeneinheit außerhalb der Wechselwirkung mit dem Einlass befindet, wobei sie den Einlass (30) öffnet, und eine Federeinrichtung (36), welche die Kolbeneinheit (34) hin zu dem Einlass (30) an dem ersten Ende des Raumes (28) drängt, umfasst, wobei die Kolbeneinheit (34) und das Gehäuse (26) zusammen eine Steuersektion (52) bilden, an der die Innenfläche des Raumes (28) des Gehäuses (26) und die Außenfläche der Kolbeneinheit (34) einander gegenüberliegen, **dadurch gekennzeichnet, dass** an der Steuersektion (52) die Kolbeneinheit (34) eine Rillung (44) an ihrer Außenfläche umfasst, die sich wenigstens teilweise in Längsrichtung der Kolbeneinheit (34) erstreckt, wobei die Rillung wenigstens eine Rille (44') umfasst, die sich umlaufend entlang der Kolbeneinheit (34) erstreckt, so dass eine axiale Länge der Rillung (44) kleiner ist als eine umlaufende Länge der Rille, und dass ein erstes Ende der Steuersektion (52) durch Stellen der Kolbeneinheit (34) zu ihrer Stellung außerhalb der Wechselwirkung mit dem Einlass (30) in Fluidverbindung mit dem Einlass (30) angeordnet werden kann und dass die Steuersektion (52) an ihrem zweiten Ende durch eine ringförmige Aussparung (42) begrenzt wird, die an dem Gehäuse (26) angeordnet ist und in Fluidverbindung mit dem Auslass (32) steht.

2. Sicherheitsventilanordnung nach Anspruch 1, **dadurch gekennzeichnet, dass** der Auslass (32) in dem Gehäuse eine Steuerkante (50) in der ringförmigen Aussparung (42) umfasst, welche die Innenfläche des Raumes (28) in dem Gehäuse (26) abgrenzt.

3. Sicherheitsventilanordnung nach Anspruch 1, **dadurch gekennzeichnet, dass** die Kolbeneinheit (34) einen Nadelteil (34.1), der einen ersten Durchmesser aufweist, und einen Steuerteil (34.2), der einen zweiten Durchmesser, größer als der erste Durchmesser, aufweist, umfasst und dass die Steuersektion (52), die sich in Längsrichtung erstreckt, durch den Steuerteil (34.2) der Kolbeneinheit (34) und das Gehäuse (26) definiert wird.

4. Sicherheitsventilanordnung nach Anspruch 1 oder 3, **dadurch gekennzeichnet, dass** die Rillung (44) ein erstes Ende (44.1) in Längsrichtung an der Seite des Einlasses (30) und ein zweites Ende (44.2) in Längsrichtung an der Seite des Auslasses (32) aufweist und dass, wenn sich die Kolbeneinheit (34) bei einer Stellung befindet, die den Einlass (30) verschließt, sich das zweites Ende (44.2) der Rillung in Längsrichtung in einem Abstand (60) von der Steuerkante (50) des Auslasses (32) befindet.

5. Sicherheitsventilanordnung nach Anspruch 4, **dadurch gekennzeichnet, dass** die Rillung (44) eine spiralförmige Rille mit wenigstens einer Gewinderille (44') umfasst.

6. Sicherheitsventilanordnung nach Anspruch 4, **dadurch gekennzeichnet, dass** die Rillung (44) eine spiralförmige Doppelgewinderille (44') umfasst.

7. Sicherheitsventilanordnung nach Anspruch 4, **dadurch gekennzeichnet, dass** die Rillung (44) eine spiralförmige Gegengewinderille (44') umfasst.

8. Sicherheitsventilanordnung nach Anspruch 4, **dadurch gekennzeichnet, dass** die Rillung (44) eine Anzahl von in Radialrichtung umschreibenden Rillen (44') umfasst, wobei eine Längsrille (44') die in Radialrichtung umschreibenden Rillen (44') verbindet.

9. Sicherheitsventilanordnung nach Anspruch 1, **dadurch gekennzeichnet, dass** der Raum (28) in dem Gehäuse und die Kolbeneinheit (34) wenigstens in dem Bereich der Steuersektion (52) mit einem zylindrischen Querschnitt versehen sind.

10. Sicherheitsventilanordnung nach Anspruch 1, **dadurch gekennzeichnet, dass** der Raum (28) in dem Gehäuse (26) und die Kolbeneinheit (34) wenigstens in dem Bereich der Steuersektion (52) mit einem zylindrischen Querschnitt versehen sind, wobei sich die Steuersektion (52) in Längsrichtung an einem Bereich erstreckt, wo ein Durchmesser der Innenfläche des Gehäuses (26) im Wesentlichen der gleiche ist wie ein Durchmesser der Kolbeneinheit (34).

11. Common-Rail-Kraftstoffeinspritzanlage (14) für eine Verbrennungskraftmaschine (10), welche die Sicherheitsventilanordnung (22) nach einem der vorhergehenden Ansprüche umfasst.

## Revendications

1. Dispositif de soupape de sûreté (22) pour un système d'injection de carburant à rampe commune (14) d'un moteur à combustion interne (10) comprenant un système d'accumulateur de pression (16) comportant un volume de travail (16') et au moins un injecteur de carburant (20) en connexion avec celui-ci, ledit dispositif de soupape de sûreté (22) comprenant un corps (26) comportant un espace (28) avec une entrée (30) à sa première extrémité, laquelle est disposée de manière à être reliée au volume de travail (16') du système d'accumulateur de pression (16), et avec une sortie (32) disposée dans une paroi du corps (26), laquelle est agencée de manière à être reliée à un système de carburant basse pression du moteur, et une unité de piston (34) disposée dans l'espace (28) de façon à pouvoir se déplacer dans sa direction longitudinale entre des positions où l'unité de piston (34) est placée en interaction avec l'entrée (30), fermant ainsi celle-ci, et où l'unité de piston est placée hors interaction avec l'entrée, ouvrant ainsi l'entrée (30), et un dispositif à ressort (36) forçant l'unité de piston (34) vers l'entrée (30) à la première extrémité de l'espace (28), l'unité de piston (34) et le corps (26) formant conjointement une section de commande (52) au niveau de laquelle la surface intérieure de l'espace (28) du corps (26) et la surface extérieure de l'unité de piston (34) se trouvent l'une en face de l'autre, **caractérisé en ce qu'**au niveau de la section de commande (52), l'unité de piston (34) comprend un rainurage (44) dans sa surface extérieure, lequel s'étend au moins partiellement dans la direction longitudinale de l'unité de piston (34), ledit rainurage comprenant au moins une rainure (44') s'étendant circonférentiellement le long de l'unité de piston (34), de sorte qu'une longueur axiale du rainurage (44) est plus petite qu'une longueur circonférentielle de la rainure, et **en ce qu'**une première extrémité de la section de commande (52) peut être mise en communication fluidique avec l'entrée (30) en plaçant l'unité de piston (34) dans sa position hors interaction avec l'entrée (30), et **en ce que** la section de commande (52), au niveau de sa deuxième extrémité de section, est bordée par une cavité annulaire (42) agencée dans le corps (26) et en communication fluidique avec la sortie (32) .

2. Dispositif de soupape de sûreté selon la revendication 1, **caractérisé en ce que** la sortie (32) dans le corps comprend un bord de commande (50) dans la cavité annulaire (42), lequel circonscrit la surface intérieure de l'espace (28) dans le corps (26).

3. Dispositif de soupape de sûreté selon la revendication 1, **caractérisé en ce que** l'unité de piston (34) comprend une partie d'aiguille (34.1) présentant un premier diamètre, et une partie de commande (34.2) présentant un deuxième diamètre supérieur au premier diamètre, et **en ce que** la section de commande (52) s'étendant longitudinalement est définie par la partie de commande (34.2) de l'unité de piston (34) et le corps (26).

4. Dispositif de soupape de sûreté selon la revendication 1 ou 3, **caractérisé en ce que** le rainurage (44) présente une première extrémité dans la direction longitudinale (44.1) du côté de l'entrée (30) et une deuxième extrémité dans la direction longitudinale (44.2) du côté de la sortie (32), et **en ce que** lorsque l'unité de piston (34) est dans une position fermant l'entrée (30), la deuxième extrémité, dans la direction longitudinale (44.2) du rainurage, se trouve à une distance (60) du bord de commande (50) de la sortie (32).

5. Dispositif de soupape de sûreté selon la revendication 4, **caractérisé en ce que** le rainurage (44) comprend une rainure hélicoïdale avec au moins une rainure filetée (44').

6. Dispositif de soupape de sûreté selon la revendication 4, **caractérisé en ce que** le rainurage (44) comprend une double rainure hélicoïdale filetée (44').

7. Dispositif de soupape de sûreté selon la revendication 4, **caractérisé en ce que** le rainurage (44) comprend une contre-rainure hélicoïdale filetée (44').

8. Dispositif de soupape de sûreté selon la revendication 4, **caractérisé en ce que** le rainurage (44) comprend un nombre de rainures radialement circonférentielles (44') avec une rainure longitudinale (44') reliant les rainures radialement circonférentielles (44').

9. Dispositif de soupape de sûreté selon la revendication 1, **caractérisé en ce que** l'espace (28) dans le corps et l'unité de piston (34) est doté d'une section transversale cylindrique au moins dans la région de la section de commande (52).

10. Dispositif de soupape de sûreté selon la revendication 1, **caractérisé en ce que** l'espace (28) dans le corps (26) et l'unité de piston (34) est doté d'une section transversale cylindrique au moins dans une région de la section de commande (52) dans laquelle la section de commande (52) s'étend dans la direction longitudinale au niveau d'une région dans laquelle un diamètre de la surface intérieure du corps (26) est substantiellement identique à un diamètre de l'unité de piston (34).

11. Système d'injection de carburant à rampe commune (14) pour un moteur à combustion interne (10) comprenant le dispositif de soupape de sûreté (22) selon l'une quelconque des revendications précédentes.
